# EUROPÄISCHE PATENTSCHRIFT

(11) **EP 3 689 523 B1**
(45) Veröffentlichungstag und Bekanntmachung des Hinweises auf die Patenterteilung: **15.12.2021**
(21) Anmeldenummer: 20150092.3
(22) Anmeldetag: 02.01.2020
(51) Int. Cl.: B23D 47/04, B27B 5/065

(54) **VERFAHREN ZUM BETREIBEN EINER PLATTENAUFTEILANLAGE, EINE PLATTENAUFTEILANLAGE SOWIE EIN COMPUTERPROGRAMMPRODUKT**
METHOD FOR OPERATING A PANEL CUTTING SYSTEM, A PANEL CUTTING SYSTEM AND A COMPUTER PROGRAM PRODUCT
PROCÉDÉ DE FONCTIONNEMENT D'UNE INSTALLATION DE DÉCOUPE DE PANNEAUX, INSTALLATION DE DÉCOUPE DE PANNEAUX ET PRODUIT PROGRAMME INFORMATIQUE

(30) Priorität: 21.01.2019 DE 102019101387
(43) Veröffentlichungstag der Anmeldung: 05.08.2020
(73) Patentinhaber: HOMAG Plattenaufteiltechnik GmbH, 75365 Calw (DE)
(72) Erfinder: Martynenko, Sergey, 71083 Herrenberg (DE); Dittus, Jens, 72218 Wildberg-Sulz am Eck (DE); Galambos, Christian, 72189 Vöhringen (DE)
(74) Vertreter: DREISS Patentanwälte PartG mbB

(56) Entgegenhaltungen:
- DE-A1- 3 716 666
- DE-C1- 3 425 204

## Beschreibung

Die Erfindung betrifft ein Verfahren zum Betreiben einer Plattenaufteilanlage sowie eine Plattenaufteilanlage nach den Oberbegriffen der nebengeordneten Ansprüche 1 und 13. Die Erfindung betrifft ebenfalls ein Computerprogrammprodukt nach Anspruch 14.

Eine Plattenbearbeitungsanlage ist beispielsweise aus der DE 10 2014 225 073 A1 bekannt. Diese umfasst einen Zuführtisch mit einer portalartigen und als "Programmschieber" bezeichneten Vorschubeinrichtung, an der eine Mehrzahl von Klemmeinrichtungen in Form von Spannzangen angebracht sind. Sie umfasst ferner eine Aufteileinrichtung in Form einer Säge. Mit ihr können großformatige plattenförmige Werkstücke beispielsweise für die Möbelherstellung längs einer Sägelinie in eine Mehrzahl von kleineren plattenförmigen Werkstücken aufgeteilt werden.

Bekannt ist ferner, dass plattenförmige Holzwerkstoffe herstellungsbedingt eingeschlossene Spannungen, sogenannte Eigenspannungen, aufweisen können. Auch können Änderungen der Umgebungstemperatur sowie der Luftfeuchtigkeit der Umgebung zu Änderungen der Materialfeuchtigkeit führen, und zwar besonders in offenen Randzonen der Werkstücke, beispielsweise bei Pressspanplatten an den nicht mit einer Deckschicht versehenen Rändern. Auf diese Weise kann über den Plattenquerschnitt ein ungleichmäßiges Feuchtigkeitsprofil entstehen, welches zu weiteren inneren Spannungen bzw. Eigenspannungen führen kann. Bei einer Aufteilung solcher Werkstücke in deren Randbereichen werden die vor allem in diesen randnahen Bereichen vorhandenen Eigenspannungen freigesetzt. Diese Entspannung führt zu einer Deformation des um die Aufteillinie herum liegenden Materials. Dies hat zur Folge, dass eine unerwünschte Krümmung der produzierten Werkstücke zurückbleibt.

Wenn sich die Eigenspannungen freisetzen und sich das Material um die Aufteillinie herum deformiert, kann dies auch zu einer Bewegung des Werkstücks während des Aufteilvorgangs führen, welche die Qualität beeinträchtigt. Bei einer Aufteilung eines plattenförmigen Werkstücks in streifenförmige Werkstücke (sogenannte "Längsaufteilung") tritt dieser Effekt am häufigsten bei der Produktion der ersten und/oder letzten streifenförmigen Werkstücke bzw. bei der Produktion des ersten und/oder letzten streifenförmigen Werkstücks aus einem Ausgangswerkstück bzw. Restwerkstück auf.

Vom Markt her sind sogenannte "Spannungsfreischnitte" bekannt, bei denen es sich um gezielte und vorab durchgeführte Schnitte handelt, durch welche bei einem aufzuteilenden plattenförmigen Werkstück die vorhandenen Eigenspannungen reduziert werden sollen. Erwähnt sind solche Spannungsfreischnitte beispielsweise in der EP 3 006 173 A1.

Die DE3425204 C1 offenbart ein Verfahren nach dem Oberbegriff des Anspruchs und eine Plattenaufteilanlage nach dem Oberbegriff des Anspruchs 13.

Aufgabe der vorliegenden Erfindung ist es, ein Verfahren zum Betreiben einer Plattenaufteilanlage zu schaffen, bei dem auf einfache Weise trotz vorhandener Eigenspannungen sehr gut maßhaltige abgetrennte Werkstücke erzeugt werden können.

Diese Aufgabe wird durch ein Verfahren, eine Plattenaufteilanlage und durch ein Computerprogrammprodukt mit den Merkmalen der nebengeordneten Ansprüche 1, 13 und 14 gelöst.

Vorteilhafte Weiterbildungen sind in Unteransprüchen angegeben.

Erfindungsgemäß wird nach einem ersten Aufteilvorgang die Klemmung des Restwerkstücks einfach zumindest soweit gelöst, dass sich das Restwerkstück aufgrund von Eigenspannungen zumindest etwas verformen kann. Dieses nunmehr verformte, aber nur noch reduzierte oder im wesentlichen keine Eigenspannungen aufweisende Restwerkstück wird dann mittels der Vorschubeinrichtung für einen zweiten Aufteilvorgang positioniert und mittels der Aufteileinrichtung in dem zweiten Aufteilvorgang aufgeteilt.

Dabei handelt es sich bei diesem zweiten Aufteilvorgang üblicherweise um einen sogenannten "Korrekturschnitt", der vorwiegend oder ausschließlich dazu dient, einen durch die Verformung entstandenen verformten Rand zu beseitigen und (wieder) einen geraden Rand zu erzeugen, und/oder um eine durch die Verformung hervorgerufene Fehlpositionierung (beispielsweise Schräglage) des Restwerkstücks zu kompensieren. Man erhält durch den zweiten Aufteilvorgang also ein im wesentlichen spannungsfreies Restwerkstück mit einem geraden und exakt ausgerichteten Rand. Dieses kann nun weiter und sehr präzise und somit maßhaltig aufgeteilt werden, da bei der weiteren Aufteilung keine weiteren Verformungen zu befürchten sind. Bei einer Aufteillinie, die zur Vorschubrichtung orthogonal ist, ist der besagte Rand der in Vorschubrichtung gesehen vordere Rand, und man erhält nach dem zweiten Aufteilvorgang ein wenigstens im Wesentlichen spannungsfreies Restwerkstück mit einem zur Vorschubrichtung exakt orthogonal ausgerichteten geraden vorderen Rand.

Es versteht sich, dass die Bezeichnung "erster" Aufteilvorgang und "zweiter" Aufteilvorgang keineswegs bedeuten, dass es sich um die absolut gesehen ersten bzw. zweiten Aufteilvorgänge an dem Werkstück handelt. Vielmehr wird hierdurch lediglich eine Reihenfolge zum Ausdruck gebracht. In der Praxis handelt es sich bei den hier genannten Aufteilvorgängen meist sogar um die letzten an einem Ausgangswerkstück vorzunehmenden Aufteilvorgänge, mit denen das Ausgangswerkstück vollständig aufgeteilt wird. Auch versteht sich, dass im vorliegenden Zusammenhang der Begriff "Klemmen" bzw. "Klemmeinrichtung" weit zu verstehen ist. Letztlich geht es darum, durch das besagte "Klemmen" eine relative Bewegung des geklemmten Werkstücks entweder zu der Vorschubeinrichtung und/oder zu einer Aufteillinie auszuschließen, beispielsweise durch einen Reibschluss aufgrund einer vertikalen Klemmkraft. So kann eine Klemmeinrichtung beispielsweise durch übliche Spannzangen eines Programmschiebers gebildet werden, sie ist jedoch keineswegs hierauf beschränkt.

Erfindungsgemäß wird zunächst das plattenförmige Werkstück an einem in einer Vorschubrichtung gesehen hinteren Werkstückrand mittels einer Mehrzahl von Klemmeinrichtungen der Vorschubeinrichtung gehalten., Im Schritt b wird mindestens eine der Klemmeinrichtungen geöffnet. Eine beispielsweise durch einen Elektromotor in Vorschubrichtung und entgegen der Vorschubrichtung bewegbare Vorschubeinrichtung, die häufig auch als "Programmschieber" bezeichnet wird, und beispielsweise pneumatisch betätigbare Klemmeinrichtungen, die häufig als "Spannzangen" bezeichnet werden, sind bei vielen existierenden Plattenaufteilanlagen vorhanden, um ein auf einem Zuführtisch liegendes Werkstück oder einen auf dem Zuführtisch liegenden Werkstückstapel der Aufteileinrichtung, beispielsweise einer Unterflursäge, zuzuführen bzw. gegenüber der Aufteillinie zu positionieren. Mit der hier vorgeschlagenen erfindungsgemäßen Maßnahme wird das Restwerkstück bei einer solchen Plattenaufteilanlage auf sehr einfache Art und Weise so freigegeben, dass es sich verformen kann und die Eigenspannungen reduziert werden können.

Ferner gehört zu der Erfindung, dass im Schritt b zumindest zunächst ein erster Teilbereich des hinteren Werkstückrands von mindestens einer Klemmeinrichtung weiterhin geklemmt und gehalten bleibt, wohingegen ein zweiter Teilbereich des hinteren Werkstückrands des Werkstücks von mindestens einer Klemmeinrichtung frei kommt. Dem liegt die Überlegung zugrunde, dass die Eigenspannungen im Restwerkstück bisweilen so groß sein können, dass sich durch den Entspannungsimpuls bei vollständig freigegebenem Restwerkstück das Restwerkstück soweit bewegen könnte, dass eine erneute Klemmung durch die Klemmeinrichtungen erschwert oder sogar überhaupt nicht mehr möglich ist, oder dass eine beispielsweise für den zweiten Aufteilvorgang vorgesehene Breite für das abzutrennende Werkstück kleiner ist als die Bewegung des Restwerkstücks. Um dies zu vermeiden, wird bei der hier vorgestellten Maßnahme das Werkstück während des Verformungsvorgangs im Schritt b noch in einem ersten und meist vergleichsweise kleinen Teilbereich des hinteren Werkstückrandes weiterhin geklemmt und auf diese Weise auch während des Lösens der Eigenspannungen in einer zulässigen Position gehalten.

Vorzugsweise ist der erste Teilbereich erheblich kleiner, insbesondere um ein Vielfaches kleiner als der zweite Teilbereich. Dies kann beispielsweise dadurch erreicht werden, dass das Werkstück während des Verformungsvorgangs im Schritt b nur noch von einer einzigen Klemmeinrichtung der Mehrzahl von Klemmeinrichtungen an seinem hinteren Werkstückrand gehalten wird, wohingegen alle anderen Klemmeinrichtungen den hinteren Werkstückrand freigegeben haben, indem deren Klemmwirkung beendet, also das Klemmen gelöst wurde.

Bei einer Weiterbildung wird vorgeschlagen, dass vor dem Schritt c mindestens eine der zuvor geöffneten Klemmeinrichtungen wieder geschlossen wird, so dass diese Klemmeinrichtung den Werkstückrand des Restwerkstücks wieder klemmt und hält. Somit wird ein zuverlässiges und präzises Positionieren des Restwerkstücks für den zweiten Aufteilvorgang ermöglicht.

Bei einer Weiterbildung hierzu wird vorgeschlagen, dass im Schritt b jene mindestens eine Klemmeinrichtung der Mehrzahl von Klemmeinrichtungen, welche den ersten Teilbereich des hinteren Werkstückrandes weiterhin klemmt und hält, von einer Steuer- und/oder Regeleinrichtung abhängig von einem Schnittplan und/oder einem Werkstückmaterial und/oder einer Werkstückform und/oder einer Werkstückposition ausgewählt bzw. bestimmt wird. Hierdurch wird eine optimale Reduktion der Eigenspannungen ermöglicht.

Bei einer Weiterbildung hierzu wird vorgeschlagen, dass im Schritt b die mindestens eine Klemmeinrichtung, welche den ersten Teilbereich des hinteren Werkstückrands des Werkstücks weiterhin klemmt und hält, in einem mittleren Bereich des hinteren Werkstückrands angeordnet ist. Dies dürfte in vielen Fällen eine besonders bevorzugte Position darstellen, da die bei der Entspannung auftretenden Verformungen oft gegenüber einer Mitte des hinteren Werkstückrandes ungefähr symmetrisch sind und so die absolute Bewegung des Werkstücks während der Verformung minimiert wird.

Bei einer Weiterbildung wird vorgeschlagen, dass im Schritt b das gesamte Restwerkstück zeitweise wenigstens im Wesentlichen freigegeben wird. Hierdurch wird eine maximale Entspannung und somit eine maximale Reduktion der Eigenspannungen ermöglicht, da eine Verformung an keiner Stelle des Restwerkstücks behindert wird.

Im Zusammenhang mit der mindestens einen Klemmeinrichtung, welche den ersten Teilbereich des hinteren Werkstückrandes zumindest zunächst weiterhin klemmt und hält, kann vorgesehen sein, dass diese den ersten Teilbereich lediglich zunächst noch klemmt und hält, um eine erste Verformung und Reduktion von Eigenspannungen zu ermöglichen. Danach wird die Klemmkraft auch dieser mindestens einen Klemmeinrichtung zumindest kurzzeitig reduziert oder sogar ganz aufgehoben, so dass auch noch im unmittelbaren Klemmbereich dieser Klemmeinrichtung zunächst noch vorhandene (geringe) Eigenspannungen gelöst bzw. reduziert werden können. Durch diese Weiterbildung wird somit eine möglichst vollständige Reduktion der Eigenspannungen erreicht, und gleichzeitig wird während der anfänglichen Reduktion der stärksten Eigenspannungen das Werkstück noch zuverlässig gehalten.

Bei einer Weiterbildung wird vorgeschlagen, dass es nach dem Schritt d die folgenden zusätzlichen Schritte aufweist:
e. Positionieren des Restwerkstücks mittels der Vorschubeinrichtung für einen dritten Aufteilvorgang;
f. Durchführen des dritten Aufteilvorgangs mittels der Aufteileinrichtung.

Dieser dritte Aufteilvorgang erzeugt aus dem spannungsarmen bzw. spannungsfreien Restwerkstück ein abgetrenntes Werkstück mit den exakt gewünschten Maßen und der genau gewünschten Geometrie.

Bei einer Weiterbildung hierzu wird vorgeschlagen, dass nach dem Schritt e und vor dem Schritt f das Restwerkstück von einem Druckbalken geklemmt und gehalten und das Restwerkstück im Übrigen frei ist. Dies gestattet es, dass nach dem dritten Aufteilvorgang nur noch ein sehr schmales Abfallstück übrig bleibt, da die Klemmeinrichtungen den Aufteilvorgang nicht behindern.

Bei einer Weiterbildung wird vorgeschlagen, dass ein durch den ersten Aufteilvorgang erzeugtes Werkstück nach dem ersten Aufteilvorgang entfernt wird. Somit wird die Verformung des Restwerkstücks im Schritt b durch das im ersten Aufteilvorgang erzeugte abgetrennte Werkstück nicht behindert.

Bei einer Weiterbildung wird vorgeschlagen, dass ein Klemmen mittels eines ersten Druckbalkens und eines zweiten Druckbalkens erfolgen kann, wobei der erste Druckbalken auf einer in Vorschubrichtung gesehen stromabwärtigen Seite der Aufteillinie und der zweite Druckbalken auf einer stromaufwärtigen Seite der Aufteillinie angeordnet ist, wobei das Verfahren die folgenden zusätzlichen Schritte aufweist:
a1. Nach dem Schritt a: Zurückziehen des Restwerkstücks nach dem ersten Aufteilvorgang in einer Richtung entgegen der Vorschubrichtung bei vom stromabwärtigen Druckbalken weiterhin geklemmtem abgetrenntem Werkstück;
b1. Im Schritt b: vollständiges Freigeben des Restwerkstücks.

Bei dieser Weiterbildung wird eine unerwünscht große Bewegung des Restwerkstücks während der Reduktion der Eigenspannungen und der hierdurch verursachten Verformungen nicht (nur) durch ein Festhalten des Restwerkstücks am hinteren Werkstückrand verhindert, sondern durch das weiterhin geklemmte abgetrennte Werkstück. Dieses Verfahren ist vergleichsweise einfach programmierbar.

Bei einer Weiterbildung hierzu wird vorgeschlagen, dass im Schritt a1 das Restwerkstück nur so weit zurückgezogen wird, dass der Abstand zwischen dem Restwerkstück und dem abgetrennten Werkstück kleiner ist als die Summe der Breite des beim zweiten Aufteilvorgang abzutrennenden Werkstücks und des beim dritten Aufteilvorgang entstehenden Restwerkstücks, zuzüglich der doppelten Breite der Aufteileinrichtung. Die Breite der Aufteileinrichtung entspricht beispielsweise der Dicke eines Sägeblatts. Hierdurch wird eine sichere Klemmung des Restwerkstücks für den zweiten Aufteilvorgang sichergestellt.

Bei einer Weiterbildung hierzu wird vorgeschlagen, dass nach dem Schritt c und vor dem Schritt d der stromaufwärtige Druckbalken das Restwerkstück für den zweiten Aufteilvorgang klemmt und der stromabwärtige Druckbalken das beim ersten Aufteilvorgang abgetrennte Werkstück freigibt. Hierdurch wird eine sichere Positionierung des Restwerkstücks während des zweiten Aufteilvorgangs ermöglicht.

Bei einer Weiterbildung wird vorgeschlagen, dass ein Klemmen mittels eines Druckbalkens erfolgen kann, wobei das Verfahren nach dem Schritt a und vor dem Schritt b folgende zusätzlichen Schritte umfasst:
a2. Entfernen des abgetrennten Werkstücks;
a3. Schließen des Druckbalkens;
a4. Überprüfen der Position des Restwerkstücks und gegebenenfalls Positionieren des Restwerkstücks so, dass der Abstand zwischen dem Restwerkstück und dem Druckbalken ausreichend groß ist, um eine Verformung des Restwerkstücks (40) aufgrund von Eigenspannungen zu ermöglichen;
und im Schritt b das Restwerkstück vollständig freigegeben wird. Bei dieser Weiterbildung wird eine unerwünscht große Bewegung des Restwerkstücks während der Reduktion der Eigenspannungen und der hierdurch verursachten Verformungen nicht (nur) durch ein Festhalten des Restwerkstücks am hinteren Werkstückrand oder ein noch geklemmtes abgetrenntes Werkstück verhindert, sondern einfach durch den abgesenkten Druckbalken. Beispielsweise kann es sinnvoll sein, das Restwerkstück in einer Richtung entgegen der Vorschubrichtung so weit zurückzuziehen, dass der Abstand zwischen dem Restwerkstück und dem Druckbalken kleiner ist als die Summe der Breite des beim zweiten Aufteilvorgang abzutrennenden Werkstücks und des beim dritten Aufteilvorgang entstehenden Restwerkstücks, zuzüglich der doppelten Breite der Aufteileinrichtung. Dieses Verfahren ist ebenfalls vergleichsweise einfach programmierbar.

Zu der Erfindung gehört auch ein Computerprogrammprodukt, umfassend Befehle, die bei der Ausführung des Programms durch einen Computer diesen veranlassen, das Verfahren bzw. die Schritte des oben beschriebenen Verfahrens auszuführen. Als Computerprogrammprodukt kommen ganz unterschiedliche Produkte infrage: beispielsweise Softwarecode zum Speichern in einem Computerspeicher und zum Ausführen auf einem Prozessor, oder Softwarecode zum Laden in eine logische Schaltung, beispielsweise einen programmierbaren Logikbaustein (FPGA) oder in einen ASIC, etc. Dass Computerprogrammprodukt kann durch einen bei einer Plattenaufteilanlage vorhandenen physischen Speicher oder über eine drahtgebundene oder drahtlose Übertragung von Daten, beispielsweise auch durch Download, bereitgestellt werden.

Nachfolgend werden beispielhafte mögliche Ausführungsformen der Erfindung unter Bezugnahme auf die beiliegende Zeichnung erläutert. In der Zeichnung zeigen:
- Figur 1: eine Draufsicht auf eine Plattenaufteilanlage mit einer Vorschubeinrichtung mit einer Mehrzahl von Klemmeinrichtungen, einer Aufteileinrichtung mit einer Aufteillinie und einem Druckbalken, mit einem großformatigen plattenförmigen Ausgangswerkstück;
- Figur 2: eine Draufsicht auf einen zu der Aufteillinie von Figur 1 benachbarten Bereich zu einem ersten Zeitpunkt einer ersten Ausführungsform eines Verfahrens zum Betreiben der Plattenaufteilanlage von Figur 1;
- Figur 3: eine Darstellung ähnlich zu Figur 2 zu einem zweiten Zeitpunkt;
- Figur 4: eine Darstellung ähnlich zu Figur 2 zu einem dritten Zeitpunkt;
- Figur 5: eine Darstellung ähnlich zu Figur 2 zu einem vierten Zeitpunkt;
- Figur 6: eine Darstellung ähnlich zu Figur 2 zu einem fünften Zeitpunkt;
- Figur 7: eine Darstellung ähnlich zu Figur 2 zu einem sechsten Zeitpunkt;
- Figur 8: eine Darstellung ähnlich zu Figur 2 zu einem siebten Zeitpunkt;
- Figur 9: eine Darstellung ähnlich zu Figur 2 zu einem achten Zeitpunkt;
- Figur 10: eine Draufsicht auf einen zu einer Aufteillinie einer Plattenaufteilanlage mit zwei Druckbalken benachbarten Bereich, zu einem ersten Zeitpunkt einer zweiten Ausführungsform eines Verfahrens zum Betreiben einer solchen Plattenaufteilanlage;
- Figur 11: eine Darstellung ähnlich zu Figur 10 zu einem zweiten Zeitpunkt;
- Figur 12: eine Darstellung ähnlich zu Figur 10 zu einem dritten Zeitpunkt;
- Figur 13: eine Darstellung ähnlich zu Figur 10 zu einem vierten Zeitpunkt;
- Figur 14: eine Draufsicht auf den zu der Aufteillinie der Plattenaufteilanlage von Figur 1 benachbarten Bereich, zu einem Zeitpunkt einer dritten Ausführungsform eines Verfahrens zum Betreiben einer solchen Plattenaufteilanlage; und
- Figur 15: ein Flussdiagramm eines Verfahrens zum Betreiben der Plattenaufteilanlage von Figur 10.

Funktionsäquivalente Elemente und Bereiche tragen auch in unterschiedlichen Ausführungsformen die gleichen Bezugszeichen. Sie werden im Normalfall nicht nochmals im Detail erläutert.

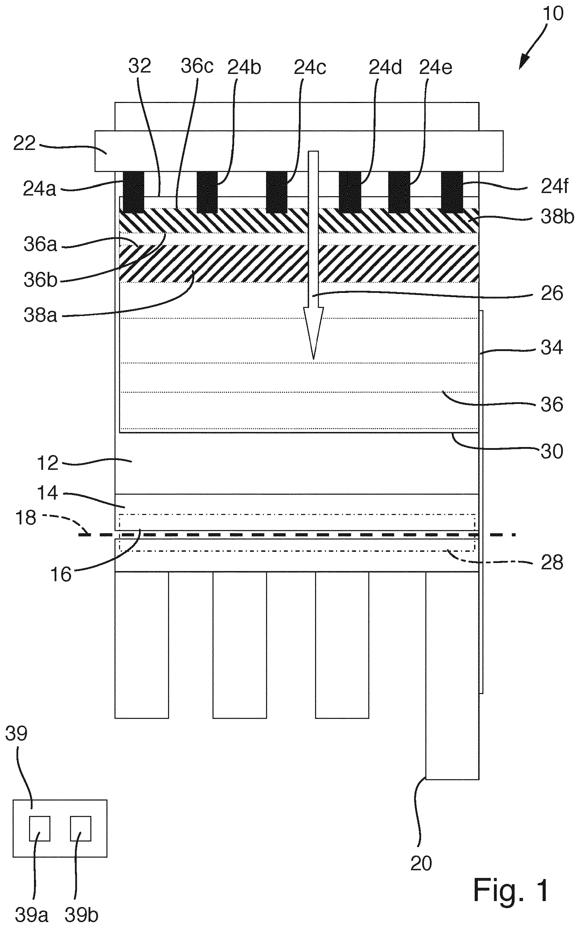

Eine Plattenaufteilanlage trägt in Figur 1 insgesamt das Bezugszeichen 10. Sie umfasst einen Zuführtisch 12, der beispielsweise durch eine Mehrzahl von Rollenschienen gebildet sein kann. An diesen schließt sich ein Maschinentisch 14 an, in dem ein Sägespalt 16 vorhanden ist. Unterhalb von dem Maschinentisch 14 ist eine nicht sichtbare Aufteileinrichtung vorliegend beispielhaft in Form einer Säge angeordnet, die mittels eines ebenfalls nicht sichtbaren Sägewagens längs einer Aufteillinie 18 bewegt werden kann. An den Maschinentisch 14 schließt sich ein aus mehreren Segmenten (ohne einzelne Bezugszeichen) bestehender Entnahmetisch 20 an (nur das äußerste rechte Segment ist mit einem Bezugszeichen versehen). Sowohl der Maschinentisch 14 als auch dem Entnahmetisch 20 können als Luftkissentische ausgeführt sein.

Oberhalb von dem Zuführtisch 12 ist eine Vorschubeinrichtung 22 in Form eines portalartigen Programmschiebers angeordnet, an der eine Mehrzahl, vorliegend beispielhaft sechs, Klemmeinrichtungen 24a-f in Form von vorliegend beispielhaft pneumatisch betätigbaren Spannzangen angeordnet ist. Die Vorschubeinrichtung 22 kann vorliegend beispielhaft elektromotorisch in einer durch einen Pfeil 26 angedeuteten Vorschubrichtung bewegt werden, und sie kann auch entgegen dieser Vorschubrichtung 26 bewegt werden. Oberhalb von der Aufteillinie 18 ist ferner ein durch eine strichpunktierte Linie angedeuteter Druckbalken 28 vorhanden, der in einer Richtung senkrecht zur Zeichnungsebene der Figur 1 elektromotorisch oder pneumatisch auf und ab bewegt werden kann.

In Figur 1 ist ein auf dem Zuführtisch 12 liegendes Ausgangswerkstück 30 gezeichnet, nämlich ein großformatiges plattenförmiges Werkstück, wie es beispielsweise für die Herstellung von Möbelteilen verwendet wird. Das Ausgangswerkstück 30 wird an einem in Vorschubrichtung 26 gesehen hinteren Werkstückrand 32 von den sechs Klemmeinrichtungen 24a-f gegriffen. Auf diese Weise kann es mittels der Vorschubeinrichtung 22 in Vorschubrichtung 26 zur Aufteillinie 18 hin und auch in entgegengesetzter Richtung bewegt werden.

In Figur 1 an einem seitlichen Rand des Zuführtisches 12, des Maschinentisches 14 und des Entnahmetisches 20 ist ferner noch ein Winkellineal 34 gezeichnet, welches exakt orthogonal zur Aufteillinie 18 ausgerichtet ist und an dem ein seitlicher Rand beispielsweise der bei einer nachfolgenden Queraufteilung produzierten streifenförmigen Werkstücke angelegt werden kann.

In das Ausgangswerkstück 30 sind gepunktete Linien 36 eingezeichnet, bei denen es sich um vorgesehene Schnittlinien von jeweiligen Aufteilvorgängen handelt. Man erkennt, dass durch diese Schnittlinien das Ausgangswerkstück 30 in streifenförmige Werkstücke aufgeteilt wird. Diese Aufteilvorgänge gehören zu einer sogenannten "Längsaufteilung" des Ausgangswerkstücks 30. Im vorliegenden Fall von besonderer Bedeutung sind die in Figur 1 drei obersten Schnittlinien 36a-c und die beiden letzten zu produzierenden streifenförmigen Werkstücke, die in Figur 1 schraffiert gezeichnet sind und dort die Bezugszeichen 38a und 38b tragen.

Zu der Plattenaufteilanlage 10 gehört auch eine Steuer-und/oder Regeleinrichtung 39, die unter anderem einen Prozessor 39a und einen Speicher 39b aufweist. Die Steuer-und/oder Regeleinrichtung 39 steuert den Betrieb der Plattenaufteilanlage 10, und sie kann zur Ausführung der nachfolgend beschriebenen Verfahren ausgebildet, beispielsweise mittels einer auf dem Speicher 39b gespeicherten und auf dem Prozessor 39a ablaufenden Software programmiert sein.

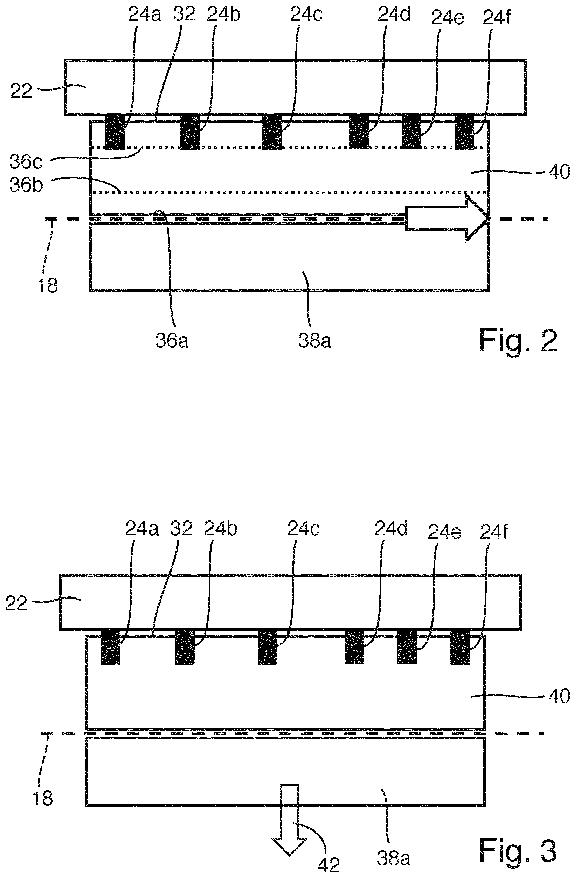

Nun wird unter Bezugnahme auf die Figuren 2-9 eine erste Ausführungsform eines Verfahrens zum Betreiben der Plattenaufteilanlage 10 erläutert werden. In Figur 2 ist die Situation zu einem ersten Zeitpunkt gezeigt, während dem längs der ersten Schnittlinie 36a das vorletzte streifenförmige Werkstück 38a abgetrennt wird. Der zugehörige Aufteilvorgang wird vorliegend als "erster Aufteilvorgang" bezeichnet. Nach Vollendung dieses ersten Aufteilvorgangs ist ein abgetrenntes Werkstück 38a und ein noch von den sechs Klemmeinrichtungen 24a-f geklemmtes Restwerkstück 40 entstanden (Figur 3). Das abgetrennte streifenförmige Werkstück 38a wird entnommen, wie in Figur 3 durch einen Pfeil 42 angedeutet ist.

Herstellungsbedingt und/oder aufgrund von Änderungen der Umgebungstemperatur und/oder der Umgebungsluftfeuchtigkeit kann es innerhalb des Ausgangswerkstücks 30 zu inneren Spannungen, sogenannten "Eigenspannungen" kommen. Diese sind insbesondere in den randnahen Bereichen des Ausgangswerkstücks 30 vorhanden, beispielsweise in dem in den Figuren 2-9 gezeichneten oberen Randbereich. Aufgrund des ersten Aufteilvorgangs längs der Schnittlinie 36a würde sich das Restwerkstück 40 eigentlich unter Reduktion bzw. Abbau der Eigenspannungen verformen wollen. Dies wird jedoch zunächst noch verhindert, da der hintere Werkstückrand 32 noch von sämtlichen Klemmeinrichtungen 24a-f gehalten wird.

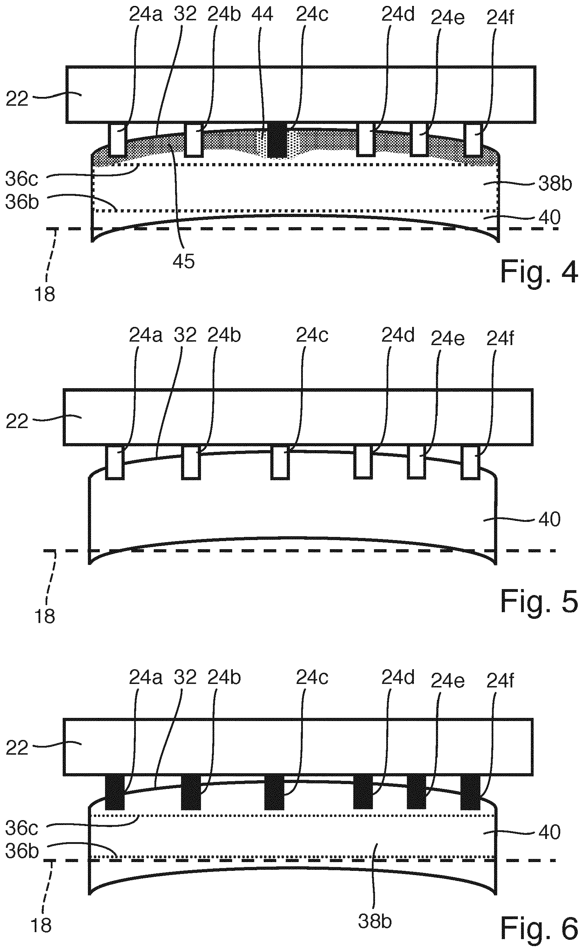

Wie aus Figur 4 hervorgeht, wird nun jedoch das Klemmen des Restwerkstücks 40 bereichsweise gelöst, indem die Klemmeinrichtungen 24a-b sowie 24d-f geöffnet werden (dies wird in Figur 4 und in den anderen Figuren dadurch angedeutet, dass die geöffneten Klemmeinrichtungen durch einen schwarz umrandeten Kasten und nicht mehr durch einen schwarz ausgefüllten Block dargestellt werden). Ein in Figur 4 gepunktet angedeuteter erster Teilbereich 44 des hinteren Werkstückrands 32 bleibt somit zumindest zunächst weiterhin von der Klemmeinrichtung 24c geklemmt und gehalten, wohingegen der restliche Teilbereich 45 des hinteren Werkstückrands 32 frei kommt. Man erkennt, dass der erste Teilbereich 44 um ein Vielfaches kleiner ist als der restliche zweite Teilbereich 45 des hinteren Werkstückrands 32. Hierdurch kann sich das Restwerkstück 40 unter einer erheblichen Reduktion der Eigenspannungen verformen, und zwar vorliegend in der Art einer Banane.

Dabei erkennt man, dass die Klemmeinrichtung 24c, welche den ersten Teilbereich 44 des hinteren Werkstückrands 32 weiterhin klemmt und hält, in einem in einer seitlichen Richtung gesehen mittleren Bereich des hinteren Werkstückrands 32 angeordnet ist. Die Klemmeinrichtung 24c, welche den ersten Teilbereich 44 des hinteren Werkstückrandes 32 weiterhin klemmt und hält, wurde hierfür von der Steuer- und/oder Regeleinrichtung 39 abhängig von einem Schnittplan und/oder einem Werkstückmaterial und/oder einer Werkstückform und/oder einer Werkstückposition ausgewählt.

Wie aus Figur 5 hervorgeht, wird nun auch noch die Klemmung der Klemmeinrichtung 24c ganz oder zumindest teilweise aufgehoben, so dass auch noch in dem ersten Teilbereich 44 vorhandene Eigenspannungen unter weiterer (geringer) Verformung des Restwerkstücks 40 reduziert werden können.

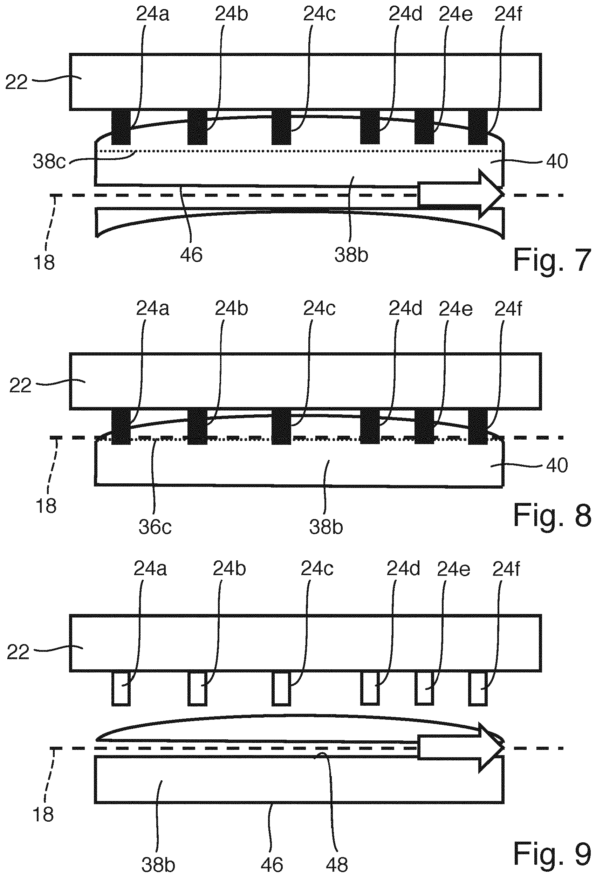

Im nächsten Verfahrensschritt wird der nunmehr gekrümmte hintere Werkstückrand 32 beispielhaft von sämtlichen Klemmeinrichtungen 24a-f wieder gegriffen, indem diese schließen und den Werkstückrand 32 klemmen, und das Restwerkstück 40 wird nun für einen zweiten Aufteilvorgang ("erster Korrekturschnitt") längs der vorgesehenen zweiten Schnittlinie 36b relativ zur Aufteillinie 18 positioniert (Figur 6). Figur 7 zeigt die Situation nach dem zweiten Aufteilvorgang. Durch diesen wird ein vollkommen gerader vorderer Werkstückrand 46 an dem letzten zu erzeugenden streifenförmigen Werkstück 38b erzeugt.

Nun wird das Restwerkstück 40 durch eine Bewegung der Vorschubeinrichtung 22 erneut relativ zur Aufteillinie 18 positioniert, und zwar für einen dritten Aufteilvorgang längs der dritten Schnittlinie 36c. Nachdem das Restwerkstück 40 positioniert ist, wird der Druckbalken 28 vorliegend beispielhaft auf das Restwerkstück 40 abgesenkt, wodurch dieses zwischen dem Druckbalken 28 und dem Maschinentisch 14 verklemmt wird. Nun können die Klemmeinrichtungen 24a-f gelöst werden, und die Vorschubeinrichtung 22 kann etwas zurückfahren.

Dann wird der dritte Aufteilvorgang mittels der Aufteileinrichtung längs der Aufteillinie 18 durchgeführt (Figur 9). Der dritte Aufteilvorgang wird auch als "zweiter Korrekturschnitt" oder auch als "Besäumschnitt" bezeichnet. Man erhält so das letzte streifenförmige Werkstück 38b mit einem exakt geraden vorderen Werkstückrand 46 und einem exakt geraden hinteren Werkstückrand 48, die beide zueinander exakt parallel sind. Das streifenförmige Werkstück 38b hat somit exakt die gewünschte Geometrie.

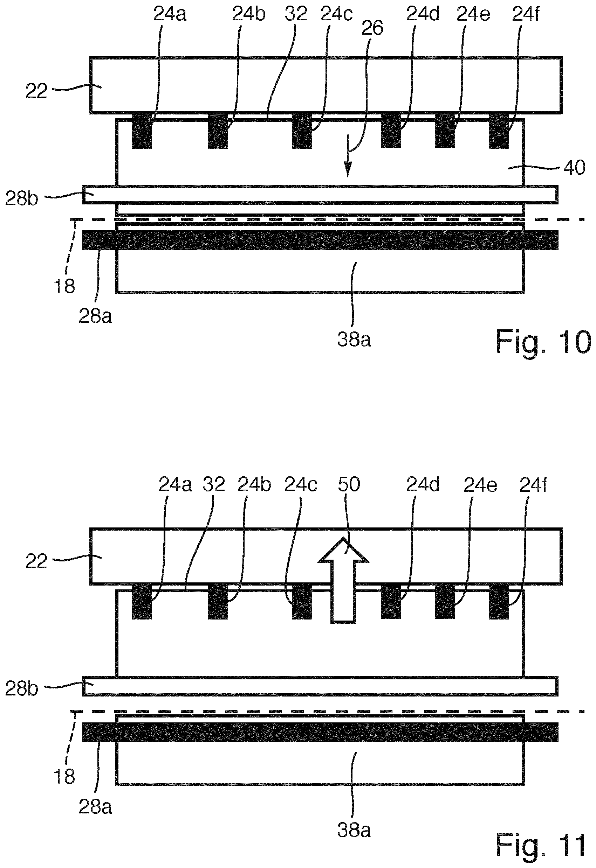

Nun wird unter Bezugnahme auf die Figuren 10-13 ein nicht erfindungsgemäßes Beispiel eines Verfahrens zum Betreiben einer Plattenaufteilanlage 10 beschrieben. Die Plattenaufteilanlage 10 weist im Bereich der Aufteillinie 18 nicht einen einzigen Druckbalken 28, sondern einen ersten Druckbalken 28a und einen zweiten Druckbalken 28b auf, wobei der erste Druckbalken 28a auf einer in Vorschubrichtung 26 gesehen "stromabwärtigen" Seite der Aufteillinie 18 angeordnet ist, und wobei der zweite Druckbalken 28b auf einer in Vorschubrichtung 26 gesehen "stromaufwärtigen" Seite der Aufteillinie 18 angeordnet ist.

In Figur 10 ist der Zeitpunkt nach Vollendung des ersten Aufteilvorgangs und nach dem Abtrennen des vorletzten streifenförmigen Werkstücks 38a gezeigt. Während das abgetrennte vorletzte streifenförmige Werkstück 38a durch den ersten Druckbalken 28a zwischen diesem und dem Maschinentisch 14 weiterhin geklemmt wird, wird das Restwerkstück 40 bei angehobenem zweitem Druckbalken 28b von der Vorschubeinrichtung 22 entgegen der Vorschubrichtung 26 zurückgezogen (Pfeil 50 in Figur 11). Der hintere Werkstückrand 32 ist hierzu von allen Klemmeinrichtungen 24a-f gehalten, diese sind also geschlossen. Ein Lösen der Eigenspannungen bei gleichzeitiger Verformung des Restwerkstücks 40 wird hierdurch noch verhindert.

Dabei wird das Restwerkstück 40 jedoch nur so weit zurückgezogen, dass der Abstand zwischen dem Restwerkstück 40 und dem abgetrennten Werkstück 38a für eine nachfolgende Verformung aufgrund der Reduktion von Eigenspannungen ausreicht, beispielsweise gerade noch etwas kleiner oder maximal gleich groß ist als bzw. wie die Summe der Breite des beim zweiten Aufteilvorgang abzutrennenden Werkstücks und des beim dritten Aufteilvorgang entstehenden Restwerkstücks 38b, zuzüglich der doppelten Breite der Aufteileinrichtung (Breite des Sägeblatts).

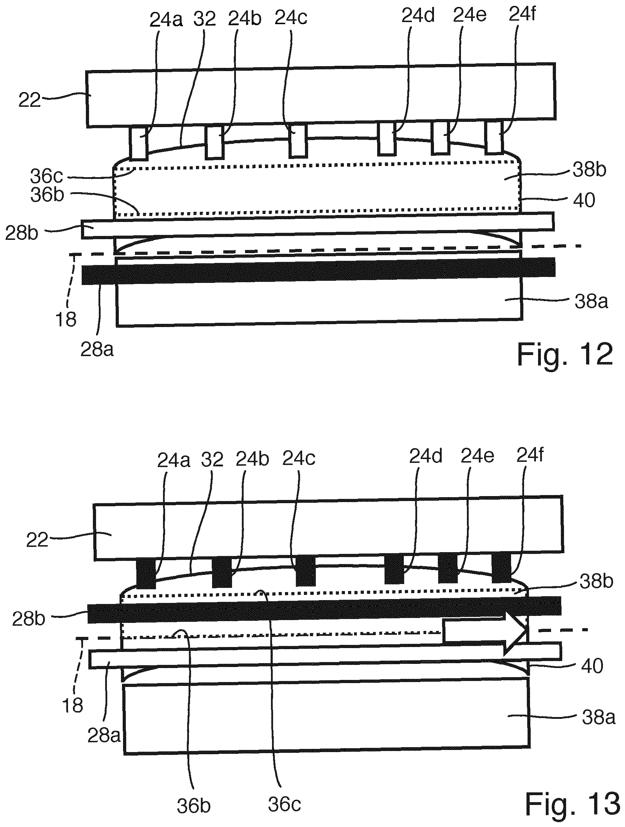

Nun werden, entsprechend Figur 12, sämtliche Klemmeinrichtungen 24a-f geöffnet, dass Restwerkstück 40 also vollständig freigegeben, und hierdurch wird der hintere Werkstückrand 32 des Restwerkstücks 40 vollständig freigegeben. Das Restwerkstück 40 kann sich daher frei verformen unter Abbau der vorhandenen Eigenspannungen. Eine unerwünscht große Bewegung des Restwerkstücks 40 wird dabei durch das weiterhin zwischen dem Druckbalken 28a und dem Maschinentisch 14 verklemmte vorletzte abgetrennte streifenförmige Werkstück 38a verhindert.

Danach wird, entsprechend Figur 13, der nunmehr gekrümmte hintere Werkstückrand 32 des Restwerkstücks 40 wieder von allen Klemmeinrichtungen 24a-f geklemmt, indem diese geschlossen werden, und dann wird durch eine Bewegung der Vorschubeinrichtung 22 das Restwerkstück 40 für den zweiten Aufteilvorgang längs der Schnittlinie 36b relativ zur Aufteillinie 18 positioniert. Hierzu wird zuvor die Klemmung des vorletzten Streifens 38a durch den Druckbalken 28a gelöst. Wenn das Restwerkstück 40 richtig positioniert ist, wird der Druckbalken 28b auf das Restwerkstück 40 abgesenkt, und der zweite Aufteilvorgang wird durchgeführt, wodurch der gerade vordere Werkstückrand 46 erzeugt wird. Nach einer Neupositionierung des Restwerkstücks 40 wird der dritte Aufteilvorgang durchgeführt, durch den das abgetrennte Werkstück 38b entsteht.

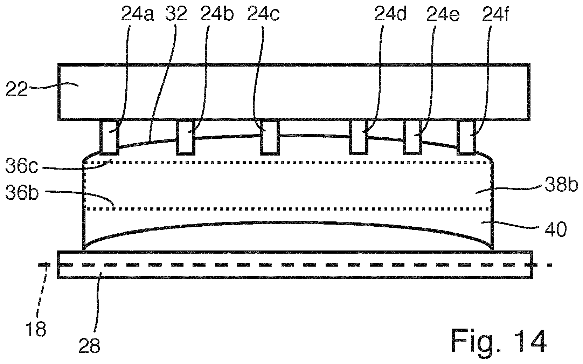

Ein nochmals nicht erfindungsgemäßes Verfahren wird nun unter Bezugnahme auf Figur 14 kurz erläutert. Dieses Verfahren kann bei der in Figur 1 gezeigten Plattenaufteilanlage 10 durchgeführt werden. Dabei wird nach dem ersten Aufteilvorgang die Position des Restwerkstücks 40 überprüft und erforderlichenfalls das Restwerkstück 40 zunächst entgegen der Vorschubrichtung 26 mittels der Vorschubeinrichtung 22 so positioniert, beispielsweise so weit zurückgezogen, dass der Abstand zwischen dem Restwerkstück 40 und dem Druckbalken 28 in abgesenktem Zustand ausreichend groß ist, um eine Verformung des Restwerkstücks 40 aufgrund von Eigenspannungen zu ermöglichen, beispielsweise dass der Abstand etwas kleiner ist als die Summe der Breite des beim zweiten Aufteilvorgang abzutrennenden Werkstücks und des beim dritten Aufteilvorgang entstehenden Restwerkstücks 38b, zuzüglich der doppelten Breite der Aufteileinrichtung (Breite des Sägeblatts).

Dann wird der Druckbalken 28 direkt auf den Maschinentisch 14 abgesenkt, ohne dass zwischen Druckbalken 28 und Maschinentisch 14 ein Werkstück verklemmt ist. Dies setzt voraus, dass das zuvor abgetrennte streifenförmige Werkstück 38a entfernt wurde. Jetzt werden die Klemmeinrichtungen 24a-f geöffnet, und somit wird das Restwerkstück 40 vollständig freigegeben, so dass sich dieses frei verformen kann. Dies ist in Figur 14 dargestellt. Eine unzulässig große Bewegung wird lediglich durch den abgesenkten Druckbalken 28 verhindert.

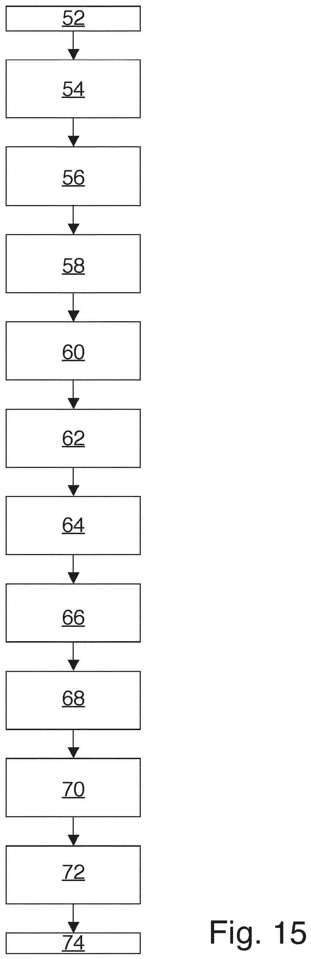

Nun wird unter Bezugnahme auf Figur 15 ein Verfahren zum Betreiben der Plattenaufteilanlage 10 erläutert. Das Verfahren beginnt in einem Startblock 52. In einem Block 54 wird der erste Aufteilvorgang durchgeführt, wodurch das abgetrennte Werkstück 38a und das noch geklemmte Restwerkstück 40 entstehen. In einem Block 56 werden die Klemmeinrichtungen 24a-b sowie 24d-f gelöst, so dass in einem Block 58 eine erste Entspannung der Eigenspannungen unter einer ersten Deformation des Restwerkstücks 40 eintreten kann. Dabei kann jene Klemmeinrichtung 24c, die (noch) nicht geöffnet werden soll, von der Steuer- und/oder Regeleinrichtung 39 abhängig von einem Schnittplan und/oder einem Werkstückmaterial, oder von Materialspannungen und/oder einer Werkstückform und/oder einer Werkstückposition ausgewählt werden. Es versteht sich, dass bei anderen Ausführungsformen eine andere Klemmeinrichtung als die Klemmeinrichtung 24c, oder auch eine Mehrzahl von Klemmeinrichtungen ausgewählt werden kann.

In einem Block 60 wird nun noch die zunächst noch klemmende Klemmeinrichtung 24c gelöst, wodurch das Restwerkstück 40 vollkommen frei wird, und noch vorhandene geringe Eigenspannungen reduziert werden, unter gleichzeitiger Deformation des Restwerkstücks 40 (Block 62). In einem Block 64 wird nun der hintere Werkstückrand 32 des Restwerkstücks 40 von den Klemmeinrichtungen 24a-f wieder geklemmt, und in einem Block 66 wird das Restwerkstück 40 relativ zur Aufteillinie 18 für den zweiten Aufteilvorgang positioniert. Nach dem durchgeführten zweiten Aufteilvorgang (Block 68) wird das Restwerkstück 40 in einem Block 70 für den dritten Aufteilvorgang positioniert, und dieser wird in einem Block 72 durchgeführt. Das Verfahren endet in einem Block 74.

## Patentansprüche

1. Verfahren zum Betreiben einer Plattenaufteilanlage (10), bei dem ein plattenförmiges Werkstück (30) wenigstens zeitweise mittels mindestens einer Klemmeinrichtung (24) durch ein Klemmen gehalten und in dem geklemmten Zustand aufgeteilt wird, wobei es mindestens die folgenden Schritte umfasst:
a. Halten des plattenförmigen Werkstücks (30) an einem in einer Vorschubrichtung (26) gesehen hinteren Werkstückrand (32) mittels einer Mehrzahl von Klemmeinrichtungen (24a-f) einer Vorschubeinrichtung (22), danach Durchführen eines ersten Aufteilvorgangs, so dass ein abgetrenntes Werkstück (38a) und ein noch geklemmtes Restwerkstück (40) entstehen;
b. mindestens bereichsweise Lösen des Klemmens des Restwerkstücks (40), indem mindestens eine der Klemmeinrichtungen (24a-b, 24d-f) geöffnet wird, derart, dass sich das Restwerkstück (40) aufgrund von Eigenspannungen verformen kann;
c. Positionieren des Restwerkstücks (40) für einen zweiten Aufteilvorgang mittels der Vorschubeinrichtung (22);
d. Durchführen des zweiten Aufteilvorgangs, **dadurch gekennzeichnet, dass** im Schritt b zumindest zunächst ein erster Teilbereich (44) des hinteren Werkstückrands (32) von mindestens einer Klemmeinrichtung (24c) weiterhin geklemmt und gehalten bleibt, wohingegen ein zweiter Teilbereich (45) des hinteren Werkstückrands (32) des Restwerkstücks (40) von mindestens einer Klemmeinrichtung (24a-b, 24d-f) frei kommt.

2. Verfahren nach Anspruch 1, **dadurch gekennzeichnet, dass** vor dem Schritt c mindestens eine der geöffneten Klemmeinrichtungen (24a-f) wieder geschlossen wird, so dass die Klemmeinrichtung (24a-f) den Werkstückrand (32) des Restwerkstücks (40) wieder klemmt und hält.

3. Verfahren nach wenigstens einem der vorhergehenden Ansprüche, **dadurch gekennzeichnet, dass** im Schritt b die mindestens eine Klemmeinrichtung (24c), welche den ersten Teilbereich (44) des hinteren Werkstückrandes (32) weiterhin klemmt und hält, von einer Steuer- und/oder Regeleinrichtung (29) abhängig von einem Schnittplan und/oder einem Werkstückmaterial und/oder einer Werkstückform und/oder einer Werkstückposition ausgewählt wird.

4. Verfahren nach wenigstens einem der vorhergehenden Ansprüche, **dadurch gekennzeichnet, dass** im Schritt b die mindestens eine Klemmeinrichtung (24c), welche den ersten Teilbereich (44) des hinteren Werkstückrands (32) weiterhin klemmt und hält, in einem mittleren Bereich des hinteren Werkstückrands (32) angeordnet ist.

5. Verfahren nach wenigstens einem der vorhergehenden Ansprüche, **dadurch gekennzeichnet, dass** im Schritt b das gesamte Restwerkstück (40) zeitweise wenigstens im Wesentlichen freigegeben wird.

6. Verfahren nach wenigstens einem der vorhergehenden Ansprüche, **dadurch gekennzeichnet, dass** es nach dem Schritt d die folgenden zusätzlichen Schritte aufweist:
e. Positionieren des Restwerkstücks (40) mittels der Vorschubeinrichtung (22) für einen dritten Aufteilvorgang;
f. Durchführen des dritten Aufteilvorgangs mittels der Aufteileinrichtung.

7. Verfahren nach Anspruch 6, **dadurch gekennzeichnet, dass** nach dem Schritt e und vor dem Schritt f das Restwerkstück (40) von einem Druckbalken (28) geklemmt und gehalten und das Restwerkstück (40) im Übrigen frei ist.

8. Verfahren nach wenigstens einem der vorhergehenden Ansprüche, **dadurch gekennzeichnet, dass** ein durch den ersten Aufteilvorgang erzeugtes Werkstück (38a) nach dem ersten Aufteilvorgang entfernt wird.

9. Verfahren nach wenigstens einem der vorhergehenden Ansprüche, **dadurch gekennzeichnet, dass** ein Klemmen mittels eines ersten Druckbalkens (28a) und eines zweiten Druckbalkens (28b) erfolgen kann, wobei der erste Druckbalken (28a) auf einer stromabwärtigen Seite der Aufteillinie (18) und der zweite Druckbalken (28b) auf einer stromaufwärtigen Seite der Aufteillinie (18) angeordnet ist, wobei das Verfahren die folgenden zusätzlichen Schritte aufweist:
a1. Nach dem Schritt a: Zurückziehen des Restwerkstücks (40) nach dem ersten Aufteilvorgang in einer Richtung entgegen der Vorschubrichtung (26) bei vom stromabwärtigen Druckbalken (28a) weiterhin geklemmtem abgetrenntem Werkstück (38a);
b1. Im Schritt b: vollständiges Freigeben des Restwerkstücks (40).

10. Verfahren nach Anspruch 9 und Anspruch 6, **dadurch gekennzeichnet, dass** im Schritt a1 das Restwerkstück (40) nur so weit zurückgezogen wird, dass der Abstand zwischen dem Restwerkstück (40) und dem abgetrennten Werkstück (38a) ausreichend groß ist, um eine Verformung des Restwerkstücks (40) aufgrund von Eigenspannungen zu ermöglichen, insbesondere kleiner ist als die Summe der Breite des beim zweiten Aufteilvorgang abzutrennenden Werkstücks und des beim dritten Aufteilvorgang entstehenden Restwerkstücks (38b), zuzüglich der doppelten Breite der Aufteileinrichtung.

11. Verfahren nach wenigstens einem der Ansprüche 9 oder 10, **dadurch gekennzeichnet, dass** nach dem Schritt c und vor dem Schritt d der stromaufwärtige Druckbalken (28b) das Restwerkstück (40) für den zweiten Aufteilvorgang klemmt und der stromabwärtige Druckbalken (28a) das beim ersten Aufteilvorgang abgetrennte Werkstück (38a) freigibt.

12. Verfahren nach wenigstens einem der Ansprüche 1-8, in jedem Fall jedoch zusammen mit Anspruch 6, **dadurch gekennzeichnet, dass** ein Klemmen mittels eines Druckbalkens erfolgen kann, wobei das Verfahren nach dem Schritt a und vor dem Schritt b folgende zusätzlichen Schritte umfasst:
a2. Entfernen des abgetrennten Werkstücks (38a);
a3. Schließen des Druckbalkens (28);
a4. Überprüfen der Position des Restwerkstücks (40) und ggf. Positionieren des Restwerkstücks (40) so, dass der Abstand zwischen dem Restwerkstück (40) und dem Druckbalken (28) ausreichend groß ist, um eine Verformung des Restwerkstücks (40) aufgrund von Eigenspannungen zu ermöglichen; und
im Schritt b das Restwerkstück (40) vollständig freigegeben wird.

13. Plattenaufteilanlage (10) zum Aufteilen von plattenförmigen Werkstücken (30), umfassend mindestens eine Vorschubeinrichtung (22) und eine Klemmeinrichtung (24a-f) für die Werkstücke (30) und mindestens eine Aufteileinrichtung zum Aufteilen der plattenförmigen Werkstücke (30) längs einer Aufteillinie (18), **dadurch gekennzeichnet, dass** sie eine Steuer- und/oder Regeleinrichtung (39) umfasst, die einen Prozessor (39a) und einen Speicher (39b) aufweist und die zur Ausführung des Verfahrens nach einem der vorhergehenden Ansprüche ausgebildet ist.

14. Computerprogrammprodukt, umfassend Befehle, die bei der Ausführung des Programms durch einen Computer diesen veranlassen, das Verfahren bzw. die Schritte des Verfahrens nach einem der Ansprüche 1-12 auszuführen.

## Claims

1. Method for operating a panel dividing system (10), in which a panel-like workpiece (30) is held at least temporarily by clamping by means of at least one clamping device (24) and is divided in the clamped state, said method comprising at least the following steps:
a. holding the plate-like workpiece (30) on a workpiece edge (32) which is at the rear when viewed in a feed direction (26) by means of a plurality of clamping devices (24a-f) of a feed device (22), and then carrying out a first dividing process such that a separated workpiece (38a) and a remaining workpiece (40) that is still clamped are formed;
b. releasing the clamping of the remaining workpiece (40) at least in regions by at least one of the clamping devices (24a-b, 24d-f) being opened such that the remaining workpiece (40) can deform due to internal stresses;
c. positioning the remaining workpiece (40) for a second dividing process by means of the feed device (22) ;
d. carrying out the second dividing process, **characterized in that**, in step b, at least initially a first portion (44) of the rear workpiece edge (32) continues to be clamped and held by at least one clamping device (24c), whereas a second portion (45) of the rear workpiece edge (32) of the remaining workpiece (40) comes free from at least one clamping device (24a-b, 24d-f).

2. Method according to claim 1, **characterized in that**, before step c, at least one of the opened clamping devices (24a-f) is closed again such that the clamping device (24a-f) clamps and holds the workpiece edge (32) of the remaining workpiece (40) again.

3. Method according to at least one of the preceding claims, **characterized in that**, in step b, the at least one clamping device (24c) which continues to clamp and hold the first portion (44) of the rear workpiece edge (32) is selected by an open-loop and/or closed-loop controller (29) according to a cutting plan and/or a workpiece material and/or a workpiece shape and/or a workpiece position.

4. Method according to at least one of the preceding claims, **characterized in that**, in step b, the at least one clamping device (24c) which continues to clamp and hold the first portion (44) of the rear workpiece edge (32) is arranged in a central region of the rear workpiece edge (32).

5. Method according to at least one of the preceding claims, **characterized in that**, in step b, the entire remaining workpiece (40) is at least substantially released temporarily.

6. Method according to at least one of the preceding claims, **characterized in that** said method comprises, after step d, the following additional steps:
e. positioning the remaining workpiece (40) for a third dividing process by means of the feed device (22);
f. carrying out the third dividing process by means of the dividing device.

7. Method according to claim 6, **characterized in that**, after step e and before step f, the remaining workpiece (40) is clamped and held by a pressure bar (28) and the remaining workpiece (40) is otherwise free.

8. Method according to at least one of the preceding claims, **characterized in that** a workpiece (38a) produced by the first dividing process is removed after the first dividing process.

9. Method according to at least one of the preceding claims, **characterized in that** clamping can be carried out by means of a first pressure bar (28a) and a second pressure bar (28b), the first pressure bar (28a) being arranged on a downstream side of the dividing line (18) and the second pressure bar (28b) being arranged on an upstream side of the dividing line (18), the method comprising the following additional steps:
a1. after step a: withdrawing the remaining workpiece (40) after the first dividing process in a direction counter to the feed direction (26) with the separated workpiece (38a) still clamped by the downstream pressure bar (28a);
b1. in step b: completely releasing the remaining workpiece (40).

10. Method according to claim 9 and claim 6, **characterized in that**, in step a1, the remaining workpiece (40) is only withdrawn far enough for the distance between the remaining workpiece (40) and the separated workpiece (38a) to be sufficiently large to allow deformation of the remaining workpiece (40) due to internal stresses, in particular to be smaller than the sum of the width of the workpiece to be separated in the second dividing process and of the remaining workpiece (38b) formed in the third dividing process plus twice the width of the dividing device.

11. Method according to at least one of claims 9 or 10, **characterized in that**, after step c and before step d, the upstream pressure bar (28b) clamps the remaining workpiece (40) for the second dividing process and the downstream pressure bar (28a) releases the workpiece (38a) separated in the first dividing process.

12. Method according to at least one of claims 1-8, but in each case together with claim 6, **characterized in that** clamping can be carried out by means of a pressure bar, the method comprising the following additional steps after step a and before step b:
a2. removing the separated workpiece (38a);
a3. closing the pressure bar (28);
a4. checking the position of the remaining workpiece (40) and, if necessary, positioning the remaining workpiece (40) such that the distance between the remaining workpiece (40) and the pressure bar (28) is sufficiently large to allow deformation of the remaining workpiece (40) due to internal stresses; and
the remaining workpiece (40) is completely released in step b.

13. Panel dividing system (10) for dividing panel-like workpieces (30), comprising at least one feed device (22) and a clamping device (24a-f) for the workpieces (30), and at least one dividing device for dividing the panel-like workpieces (30) along a dividing line (18), **characterized in that** said system comprises an open-loop and/or closed-loop controller (39) which has a processor (39a) and a memory (39b) and which is designed to execute the method according to any of the preceding claims.

14. Computer program product comprising commands which, when the program is executed by a computer, cause the computer to execute the method or the steps of the method according to any of claims 1-12.

## Revendications

1. Procédé destiné à faire fonctionner une installation à diviser des panneaux (10), dans lequel une pièce (30) en forme de panneau est maintenue au moins temporairement par un serrage au moyen d'au moins un dispositif de serrage (24) et est divisée à l'état serré, comprenant au moins les étapes suivantes consistant à:
a. maintenir la pièce (30) en forme de panneau sur un bord arrière de pièce (32), vu dans une direction d'avance (26), au moyen d'une pluralité de dispositifs de serrage (24a-f) d'un dispositif d'avance (22), puis mettre en œuvre une première opération de division de sorte que l'on obtienne une pièce (38a) séparée et une pièce restante (40) encore serrée;
b. relâcher au moins par zones le serrage de la pièce restante (40) en ouvrant au moins un des dispositifs de serrage (24a-b, 24d-f) de telle sorte que la pièce restante (40) puisse se déformer en raison de contraintes propres,
c. positionner la pièce restante (40) pour une deuxième opération de division au moyen du dispositif d'avance (22);
d. mettre en œuvre la deuxième opération de division, **caractérisé par le fait que**, à l'étape b, on continue à serrer et à maintenir au moins d'abord une première zone partielle (44) du bord arrière de pièce (32) par l'intermédiaire d'au moins un dispositif de serrage (24c), tandis qu'une deuxième zone partielle (45) du bord arrière de pièce (32) de la pièce restante (40) se libère d'au moins un dispositif de serrage (24a-b, 24d-f).

2. Procédé selon la revendication 1, **caractérisé par le fait que**, avant l'étape c, au moins l'un des dispositifs de serrage (24a-f) ouverts est refermé de sorte que le dispositif de serrage (24a-f) serre et maintient à nouveau le bord de pièce (32) de la pièce restante (40).

3. Procédé selon l'une au moins des revendications précédentes, **caractérisé par le fait que**, à l'étape b, ledit au moins un dispositif de serrage (24c) qui continue à serrer et maintenir la première zone partielle (44) du bord arrière de pièce (32) est choisi par un dispositif de commande et/ou de régulation (29) en fonction d'un plan de coupe et/ou d'un matériau de la pièce et/ou d'une forme de la pièce et/ou d'une position de la pièce.

4. Procédé selon l'une au moins des revendications précédentes, **caractérisé par le fait que**, à l'étape b, ledit au moins un dispositif de serrage (24c) qui continue à serrer et à maintenir la première zone partielle (44) du bord arrière de pièce (32) est agencé dans une zone centrale du bord arrière de pièce (32) .

5. Procédé selon l'une au moins des revendications précédentes, **caractérisé par le fait que**, à l'étape b, toute la pièce restante (40) est libérée temporairement au moins pour l'essentiel.

6. Procédé selon l'une au moins des revendications précédentes, **caractérisé par le fait qu'**il comprend les étapes supplémentaires suivantes après l'étape d, consistant à:
e. positionner la pièce restante (40) au moyen du dispositif d'avance (22) pour une troisième opération de division;
f. mettre en œuvre la troisième opération de division au moyen du dispositif de division.

7. Procédé selon la revendication 6, **caractérisé par le fait que**, après l'étape e et avant l'étape f, la pièce restante (40) est serrée et maintenue par une barre de pression (28) et la pièce restante (40) est par ailleurs libre.

8. Procédé selon l'une au moins des revendications précédentes, **caractérisé par le fait qu'**une pièce (38a) produite par la première opération de division est retirée après la première opération de division.

9. Procédé selon l'une au moins des revendications précédentes, **caractérisé par le fait qu'**un serrage au moyen d'une première barre de pression (28a) et d'une deuxième barre de pression (28b) peut avoir lieu, dans lequel la première barre de pression (28a) est agencée sur un côté aval de la ligne de division (18) et la deuxième barre de pression (28b) est agencée sur un côté amont de la ligne de division (18), le procédé comprenant les étapes supplémentaires suivantes consistant à:
a1. après l'étape a : retirer la pièce restante (40) après la première opération de division dans une direction opposée à la direction d'avance (26), la pièce (38a) séparée étant toujours serrée par la barre de pression aval (28a);
b1. à l'étape b: libérer complètement la pièce restante (40).

10. Procédé selon la revendication 9 et la revendication 6, **caractérisé par le fait que**, à l'étape a1, la pièce restante (40) n'est retirée que jusqu'à ce que la distance séparant la pièce restante (40) et la pièce séparée (38a) soit suffisamment grande pour permettre une déformation de la pièce restante (40) en raison de contraintes propres, en particulier soit inférieure à la somme de la largeur de la pièce à séparer lors de la deuxième opération de division et de la pièce restante (38b) résultant de la troisième opération de division, plus deux fois la largeur du dispositif de division.

11. Procédé selon l'une au moins des revendications 9 ou 10, **caractérisé par le fait que**, après l'étape c et avant l'étape d, la barre de pression amont (28b) serre la pièce restante (40) pour la deuxième opération de division et la barre de pression aval (28a) libère la pièce (38a) séparée lors de la première opération de division.

12. Procédé selon l'une au moins des revendications 1 à 8, mais en tout cas conjointement avec la revendication 6, **caractérisé par le fait qu'**un serrage peut se faire au moyen d'une barre de pression, le procédé comprenant les étapes supplémentaires suivantes après l'étape a et avant étape b:
a2. retirer la pièce (38a) séparée;
a3. fermer la barre de pression (28);
a4. vérifier la position de la pièce restante (40) et, le cas échéant, positionner la pièce restante (40) de telle sorte que la distance entre la pièce restante (40) et la barre de pression (28) soit suffisamment grande pour permettre la déformation de la pièce restante (40) en raison de contraintes propres; et
la pièce restante (40) est libérée complètement à l'étape b.

13. Installation à diviser des panneaux (10) pour diviser des pièces (30) en forme de panneaux, comprenant au moins un dispositif d'avance (22) et un dispositif de serrage (24a-f) pour les pièces (30) ainsi qu'au moins un dispositif de division pour diviser les pièces (30) en forme de panneaux le long d'une ligne de séparation (18), **caractérisée par le fait qu'**elle comprend un dispositif de commande et/ou de régulation (39) qui présente un processeur (39a) et une mémoire (39b) et qui est conçu pour mettre en œuvre le procédé selon l'une quelconque des revendications précédentes.

14. Produit de programme informatique comprenant des instructions qui, lorsque le programme est exécuté par un ordinateur, amènent celui-ci à mettre en œuvre le procédé ou bien les étapes du procédé selon l'une quelconque des revendications 1 à 12.
